# EUROPEAN PATENT APPLICATION

(11) **EP 1 422 941 A2**
(43) Date of publication of application: **26.05.2004**
(21) Application number: 03021462.1
(22) Date of filing: 23.09.2003
(51) Int. Cl.: H04N 5/91

(54) **Information playback apparatus and information playback method**

(30) Priority: 19.11.2002 JP 2002335373
(71) Applicant: Kabushiki Kaisha Toshiba, Tokyo (JP)
(72) Inventor: Tsumagari, Yasufumi, 1-1 Shibaura 1-chome Minato-ku Tokyo 105 (JP); Mimura. Hideki, 1-1 Shibaura 1-chome Minato-ku Tokyo 105 (JP)
(74) Representative: Henkel, Feiler & Hänzel

(57) **Abstract**

An information playback apparatus according to one aspect of this invention comprises a first acquisition unit (200, 300) configured to acquire first expansion information from an information storage medium, a first storage unit (209) configured to store the first expansion information acquired by the first acquisition unit, a second acquisition unit (200, 211) configured to acquire second expansion information from an external apparatus via a communication line, a second storage unit (209) configured to store the second expansion information acquired by the second acquisition unit, a transfer control unit (204) configured to transfer the second expansion information stored in the second storage unit to the first storage unit in response to a request that requires the second expansion information, and a playback unit (203, 208) configured to play back the first expansion information and the second expansion information stored in the first storage unit.

## Description

The present invention relates to an information playback apparatus and information playback method for playing back contents stored in an information storage medium.

In recent years, the standard for a read-only DVD (Digital Versatile Disk) has been specified, and playback apparatus that play back video/audio information stored in read-only DVDs are commercially available.

According to the read-only DVD standard, the read-only DVD stores presentation data which records actual video and audio data, and navigation data used to manage the presentation data. The presentation data contains video data, audio data, and sub-picture data, which are multiplexed according to the specification of a program stream (2048 bytes) specified by MPEG2. The navigation data describes PGCs (ProGram Chains) and Cells, which set a time configuration and order of video and audio data to be played back. With this navigation data, multi-angle, multi-story, and parental functions can be implemented.

As a prior art associated with the above technique, an image display apparatus which provides a service that integrates a DVD-Video title and HTML file has been disclosed in Jpn. Pat. Appln. KOKAI Publication No. 11-161663. This image display apparatus extracts a URL from a navigation pack in a video object-unit, and establishes connection to the Internet based on the extracted URL, so as to display data in conjunction with a scene to be played back.

According to the read-only DVD standard, only an MPEG2 program stream recorded on a disk can be played back, and information other than the MPEG2 program stream recorded on the disk cannot be played back. That is, the expandability of DVD playback is poor.

In the above reference, a wait time required until data is downloaded after connection to the Internet is established poses a problem. In general, the readout speed of information from a DVD is higher than the download speed of information via the Internet. That is, a given period of time is required to download information via the Internet, thus producing a certain wait time for the user.

It is an object of the present invention to provide an information playback apparatus and information playback method, which can assure high expandability of playback of an information storage medium, and can relatively shorten a playback wait time.

An information playback apparatus according to one aspect of the present invention comprises a first acquisition unit configured to acquire first expansion information from an information storage medium, a first storage unit configured to store the first expansion information acquired by the first acquisition unit, a second acquisition unit configured to acquire second expansion information from an external apparatus via a communication line on the basis of information contained in the first expansion information, a second storage unit configured to store the second expansion information acquired by the second acquisition unit, a transfer unit configured to transfer the second expansion information stored in the second storage unit to the first storage unit in response to a request that requires the second expansion information, and a playback unit configured to play back the first expansion information and the second expansion information stored in the first storage unit.

An information playback method according to one aspect of the present invention comprises: acquiring first expansion information from an information storage medium and storing the acquired first expansion information in a first storage unit; acquiring second expansion information from an external apparatus via a communication line on the basis of information contained in the first expansion information, and storing the acquired second expansion information in a second storage unit; transferring the second expansion information stored in the second storage unit to the first storage unit in response to a request that requires the second expansion information; and playing back the first expansion information and the second expansion information stored in the first storage unit.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows an example of the data structure of a DVD-Video disk;
FIG. 2 shows an example of the data structure of an enhanced DVD-Video disk;
FIG. 3 is a block diagram showing an example of a DVD playback apparatus (information playback apparatus);
FIG. 4 is a diagram for explaining an example of a schematic arrangement and operation of a preload/download buffer unit adopted in the DVD playback apparatus shown in FIG. 3;
FIG. 5 is a view for explaining an example of a data storage process in download and preload sections in the preload/download buffer unit shown in FIG. 4;
FIG. 6 shows an example of playback of DVD-Video contents alone;
FIG. 7 shows an example of playback of DVD-Video contents and ENAV contents (moving picture, still picture, text);
FIG. 8 shows an example of playback of DVD-Video contents and ENAV contents (audio);
FIG. 9 shows an example of playback of DVD-Video contents and ENAV contents (font);
FIG. 10 is a view for explaining transfer of data from the download section to the preload section, and transition of the playback status of data stored in the preload section;
FIG. 11 is a view showing transfer of data from the download section to the preload section, and transition of the playback status of data stored in the preload section, and for explaining an example of an erase process of data in the preload section;
FIG. 12 is a view showing transfer of data from the download section to the preload section, and transition of the playback status of data stored in the preload section, and for especially explaining an example of a case wherein download and playback processes are parallelly executed;
FIG. 13 is a view showing transfer of data from the download section to the preload section, and transition of the playback status of data stored in the preload section, and for especially explaining an example of a case wherein some download wait time is required upon parallelly executing the download and playback processes;
FIG. 14 is a flow chart for explaining an example of a basic operation of the preload section;
FIG. 15 is a flow chart for explaining an example of a basic operation of the download section;
FIG. 16 is a block diagram for explaining another example 1 of the preload/download buffer unit, and showing the first preload/download operation stage;
FIG. 17 is a block diagram for explaining another example 1 of the preload/download buffer unit, and showing the second preload/download operation stage;
FIG. 18 is a chart showing the download timings and playback timings of downloaded expansion information in another example 1 of the preload/download buffer unit;
FIG. 19 is a block diagram for explaining another example 2 of the preload/download buffer unit;
FIG. 20 is a chart for explaining another example 2 of the preload/download buffer unit, and showing a case wherein the preload/download buffer unit is used in only a preload process; and
FIG. 21 is a block diagram for explaining another example 3 of the preload/download buffer unit.

A preferred embodiment of the present invention will be described hereinafter with reference to the accompanying drawings.

The data structure of a disk which considers compatibility to the DVD-Video standard will be explained first.

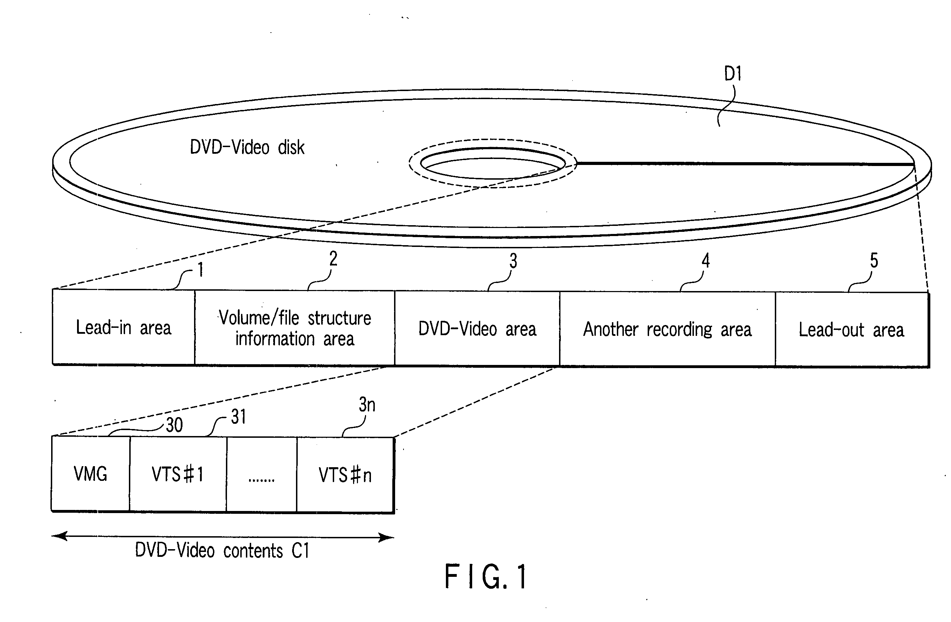

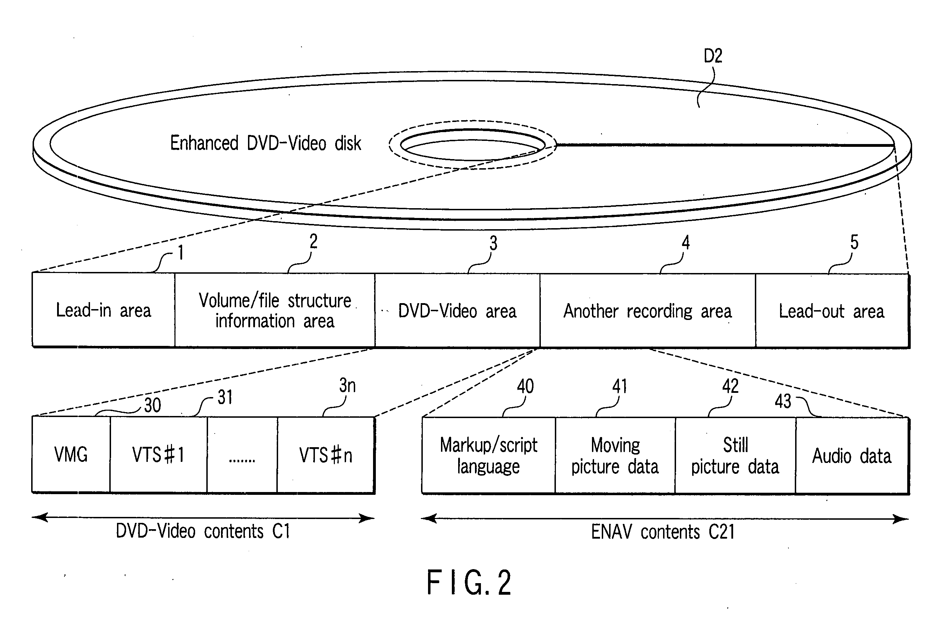

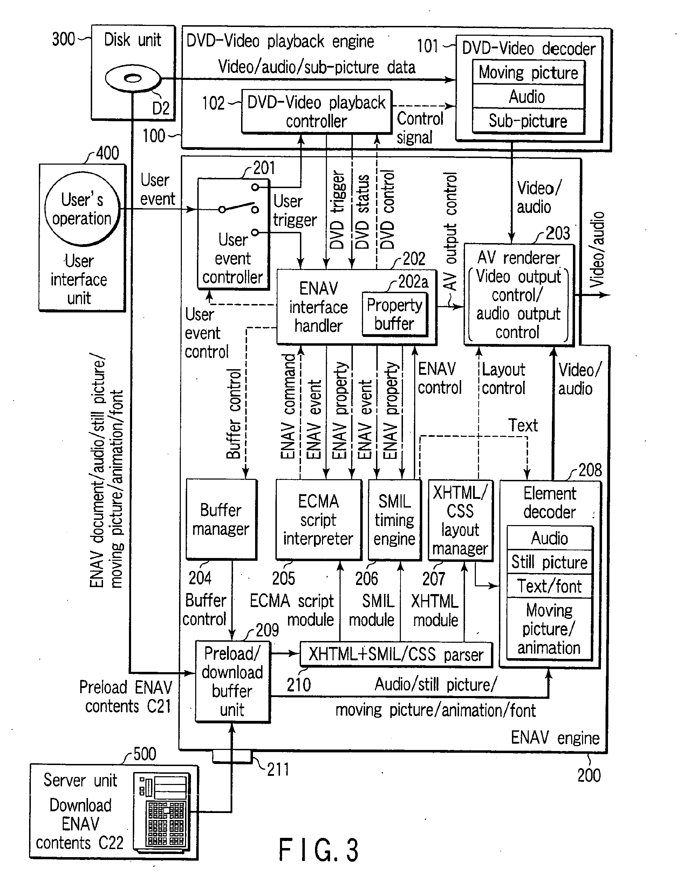

FIGS. 1 and 2 show examples of the data structures of DVD-Video disks which can be played back by a DVD-Video player shown in FIG. 3 (to be described later) .

FIG. 1 shows an example of the data structure of a standard DVD-Video disk D1. A DVD-Video area 3 of the standard DVD-Video disk D1 stores DVD-Video contents C1 (having an MPEG2 program stream structure).

On the other hand, FIG. 2 shows the data structure of an enhanced DVD-Video disk D2. A DVD-Video area 3 of the enhanced DVD-Video disk D2 stores DVD-Video contents C1 (having an MPEG2 program stream structure) having the same data structure as the DVD-Video standard. Furthermore, another recording area 4 of the enhanced DVD-Video disk D2 stores enhanced navigation (to be abbreviated as ENAV hereinafter) contents C21 which allows a wide variety of playback of video contents. Note that the presence of the recording area 4 is also accepted in the DVD-Video standard.

The basic data structure of a DVD-Video disk will be explained below. The recording area of the DVD-Video disk includes a lead-in area 1, volume space, and lead-out area 5 in turn from its inner periphery. The volume space contains a volume/file structure information area 2, and DVD-Video area (DVD-Video zone) 3, and can also have another recording area (DVD other zone) 4 as an option.

The volume/file structure information area 2 is assigned for a UDF (Universal Disk Format) bridge. The volume of the UDF bridge format is recognized according to ISO/IEC13346 Part 2. A space that recognizes this volume consists of successive sectors, and starts from the first logical sector of the volume space in FIGS. 1 and 2. First 16 logical sectors are reserved for system use specified by ISO9660. In order to assure compatibility to the conventional DVD-Video standard, the volume/file structure information area 2 with such contents is required.

The DVD-Video area 3 records management information called video manager VMG 30 and one or more video contents called video title sets VTS (VTS#1 to VTS#n). The VMG 30 is management information for all VTSs present in the DVD-Video area 3, and contains control data VMGI, VMG menu data VMGM_VOBS (option), and VMG backup data. Each VTS contains control data VTSI of that VTS, VTS menu data VTSM_VOBS (option), data VTSTT_VOBS of the contents (movie or the like) of that VTS (title), and VTSI backup data. To assure compatibility to the conventional DVD-Video standard, the DVD-Video area with such contents is also required.

A playback select menu or the like of each title (VTS#1 to VTS#n) is given in advance by a provider (the producer of a DVD video disk) using the VMG, and a playback chapter select menu, the playback order of recorded contents (cells), and the like in a specific title (e.g., VTS#1) are given in advance by the provider using the VTSI. Therefore, the viewer of the disk (the user of the DVD-Video player) can enjoy the recorded contents of that disk in accordance with menus of the VMG/VTSI prepared in advance by the provider and playback control information (program chain information PGCI) in the VTSI. However, with the DVD-Video standard, the viewer (user) cannot play back the contents (movie or music) of each VTS by a method different from the VMG/VTSI prepared by the provider.

The enhanced DVD-Video disk D2 shown in FIG. 2 is prepared for a mechanism that allows the user to play back the contents (movie or music) of each VTS by a method different from the VMG/VTSI prepared by the provider, and to play back while adding contents different from the VMG/VTSI prepared by the provider. The ENAV contents C21 contained in this disk D2 cannot be accessed by a DVD-Video player which is manufactured on the basis of the conventional DVD-Video standard (even if the ENAV contents can be accessed, their contents cannot be used). However, a DVD-Video player (player in FIG. 3 or the like) can access the ENAV contents C21, and can use their playback contents.

The ENAV contents C21 (C22) are configured to contain audio data, still picture data, font/text data, moving picture data, animation data, and the like, and also an ENAV document (described in a Markup/Script language) as information for controlling playback of these data. This playback control information describes, using a Markup language or Script language, playback methods (display method, playback order, playback switch sequence, selection of data to be played back, and the like) of the ENAV contents (consisting of audio, still picture, font/text, moving picture, animation, and the like) and/or the DVD-Video contents C1. For example, Markup languages such as HTML (Hyper Text Markup Language)/XHTML (extensible Hyper Text Markup Language), SMIL (Synchronized Multimedia Integration Language), and the like, Script languages such as an ECMA (European Computer Manufacturers Association) script, JavaScript, and the' like, and so forth, may be used in combination.

Since the contents of the enhanced DVD-Video disk D2 in FIG. 2 except for the other recording area comply with the DVD-Video standard, video contents recorded on the DVD-Video area can be played back using an already prevalent DVD-Video player (i.e., this disk is compatible to the conventional DVD-Video disk D1).

The ENAV contents C21 recorded on the other recording area cannot be played back (or used) by the conventional DVD-Video player but can be played back and used by a DVD-Video player (FIG. 3) according to an embodiment of the present invention. Therefore, when the ENAV contents C21 (and also ENAV contents C22) are played back using the DVD-Video player according to an embodiment of the present invention, the user can enjoy not only the contents of the VMG/VTSI prepared in advance by the provider but also a variety of video playback features.

FIG. 3 shows an example of a DVD-Video player used to play back an enhanced DVD-Video disk (FIG. 2) according to the embodiment of the present invention. This DVD-Video player plays back and processes recorded contents (DVD-Video contents C1 and/or ENAV contents C21) from the enhanced DVD-Video disk D2 (FIG. 2) which is compatible to the DVD-Video standard, and downloads and processes ENAV contents C22 via a communication line such as the Internet or the like. Note that the ENAV contents C21 are first expansion information, and the ENAV contents C22 are second expansion information.

The DVD-Video player shown in FIG. 3 comprises a DVD-Video playback engine 100, ENAV engine 200, disk unit 300, and user interface unit 400. The DVD-Video playback engine 100 plays back and processes an MPEG2 program stream (DVD-Video contents C1) recorded on the disk D2. The ENAV engine 200 plays back and processes the ENAV contents C21 and C22. The disk unit 300 reads out the DVD-Video contents C1 and/or ENAV contents C21 recorded on the disk D2. The user interface unit 400 transmits inputs (user's operations) by the user of the player as user events.

The ENAV engine 200 comprises an Internet connection unit 211. The Internet connection unit 211 serves as a communication means used to establish connection to a communication line such as the Internet or the like. Furthermore, the ENAV engine 200 comprises preload/download buffer unit 209, XHTML+SMIL/CSS-parser 210, XHTML/CSS layout manager 207, ECMA Script interpreter 205, SMIL timing engine 206, ENAV interface handler 202, user event controller 201, element decoder 208, AV renderer 203, and buffer manager 204.

In the block arrangement shown in FIG. 3, a DVD-Video playback controller 102, a DVD-Video decoder 101, the user event controller 201, the ENAV interface handler 202, the XHTML+SMIL/CSS parser 210, the ECMA Script interpreter 205, the SMIL timing engine 206, the XHTML/CSS layout manager 207, the AV renderer 203, the element decoder 208, the buffer manager 204, and the like can be implemented by a microcomputer (and/or hardware logic) which serves as functions of the respective blocks by an installed program (firmware; not shown). A work area used upon executing this firmware can be assured on a semiconductor memory (and a hard disk as needed; not shown) in the respective blocks.

The DVD-Video playback engine 100 is a device for playing back the DVD-Video contents C1 based on the existing DVD-Video standard, and includes the DVD-Video decoder 101 which decodes the DVD-Video contents C1 loaded by the disk unit 300, and the DVD-Video playback controller 102 which makes playback control of the DVD-Video contents C1.

The DVD-Video decoder 101 has a function of decoding video data, audio data, and sub-picture data based on the existing DVD-Video standard, and outputting the decoded video data (mixed data of the aforementioned video and sub-picture data) and audio data, respectively. With this function, the DVD-Video playback engine 100 has the same function as that of a playback engine of a normal DVD-Video player, which is manufactured based on the existing DVD-Video standard. That is, the player shown in FIG. 3 can play back video data, audio data, and the like of an MPEG2 program stream as in a normal DVD-Video player, and can play back an existing DVD-Video disk (complying with the conventional DVD-Video standard) D1.

In addition, the DVD-Video playback controller 102 can also control playback of the DVD-Video contents C1 in accordance with a "DVD control" signal output from the ENAV engine 200. More specifically, if an arbitrary event (e.g., menu call or title jump) has occurred in the DVD-Video playback engine 100 in a DVD-Video playback mode, the DVD-Video playback controller 102 can output a "DVD trigger" signal indicating the playback status of the DVD-Video contents C1 to the ENAV engine 200. In this case (simultaneously with output of the DVD trigger signal or at an appropriate timing before and after the output), the DVD-Video playback controller 102 can output a "DVD status" signal indicating property information (e.g., an audio language, sub-picture subtitle language, playback operation, playback position, various kinds of time information, disk contents, and the like set in the player) of the DVD-Video player to the ENAV engine 200.

The user event controller 201 makes control based on user's operations, and receives "user events" corresponding to user's operations (menu call, title jump, play start, play stop, play pause, etc.) from the user interface unit 400. After that, the user event controller 201 executes one of the following processes on the basis of a "user event control" signal sent from the ENAV interface handler 202.
1. The controller 201 transmits a "user trigger" signal to the ENAV interface handler 202.
2. The controller 201 transmits a "user trigger" signal to the DVD-Video playback controller 102.
3. The controller 201 inhibits a user event (since, for example, a DVD-Video playback process that is not designed by the contents provider may be made).

At this time, the aforementioned "user event control" signal specifically executes, e.g., the following control.
1. When video data of the DVD-Video playback engine 100 is to be output from the AV renderer 203, the user event signal is directly transmitted to the DVD-Video playback engine 100 as a user trigger signal. In this case, the user's operation is the same as that in a normal DVD-Video playback mode.
2. When video data of the ENAV engine 200 is to be output from the AV renderer 203, or when video data of the DVD-Video playback engine 100 and that of the ENAV engine 200 are to be mixed and simultaneously output by the AV renderer 203, the following control is made.
   2-1. When the user event signal is output to the ENAV interface handler 202 as a user trigger signal, the ENAV interface handler 202 outputs a function call corresponding to that event (menu call or the like) to the DVD-Video playback controller 102 of the DVD-Video playback engine 100 as a DVD control signal.
   2-2. When a DVD-Video playback process which is not designed by the system (e.g., a playback method that the currently active DVD-Video playback engine 100 cannot cope with, or an operation inhibited by user operation control UOP specified by the current DVD standard) may be made, transmission of the user event signal is blocked (inhibited or blocked).

Note that the contents of the user event signal (user trigger signal) transmitted to the ENAV interface handler 202 may be transmitted to the AV renderer 203 as an "AV output control" signal. As a result, for example, when the user has changed the contents or window size or has shifted its display position using a cursor key of a remote controller (not shown), this operation is sent from the user event controller 201 to the ENAV interface handler 202 as a user trigger signal, which is output to the AV renderer 203 as a corresponding AV output control signal. In addition, when a user event indicating switching between a video/audio output from the DVD-Video playback engine 100 and that from the ENAV engine 200 is sent to the AV renderer 203, the video/audio output can be switched in response to user's operation.

The ENAV interface handler 202 exchanges a "DVD status" signal, "DVD trigger" signal, and/or "DVD control" signal with the DVD-Video playback controller 102, or exchanges a "user trigger" signal and/or "user event control" signal with the user event controller 201. Furthermore, the ENAV interface handler 202 exchanges an "ENAV event", "ENAV property", "ENAV command", and "ENAV control" signal with the ECMA Script interpreter 205 and SMIL timing engine 206. More specifically, the ENAV interface handler 202 executes the following processes.
1. The handler 202 transmits a "DVD trigger" signal which is received from the DVD-Video playback engine 100 and indicates the operation of the DVD-Video playback engine 100, or a "user trigger" which is received from the user event controller 201 and indicates the user's operation to the ECMA Script interpreter 205 and SMIL timing engine 206 as an "ENAV event".
2. The handler 202 transmits a "DVD status" signal which is received from the DVD-Video playback engine 100 and indicates the playback status of the DVD-Video playback engine 100 to the ECMA Script interpreter 205 and SMIL timing engine 206 as an "ENAV property event". At this time, DVD status information is saved in a property buffer 202a of the ENAV interface handler 202 as needed.
3. The handler 202 transmits an "ENAV control" signal from the SMIL timing engine 206 to the DVD-Video playback engine 100 as a "DVD control" signal.
4. The handler 202 outputs a "user event control" signal used to switch a user event to the user event controller 201, a "DVD control" signal used to control playback of the DVD-Video playback engine 100 to the DVD-Video playback engine 100, an "AV output control" signal used to switch video and audio data to the AV renderer 203, and a "buffer control" signal used to load/erase the contents of the buffer to the buffer manager 204, in accordance with the contents of an "ENAV control" signal from the ECMA Script Interpreter 205.

That is, the ENAV interface handler 202 has a function of parsing and interpreting ENAV contents, and then converting control signals and the like between the DVD-Video playback engine 100 and ENAV engine 200.

The ENAV interface handler 202 is configured to exchange a first signal and to exchange a second signal on the basis of the contents which are parsed by the XHTML+SMIL/CSS parser 210 and are interpreted by the ECMA Script interpreter 205 and SMIL timing engine 206, or a user event from an input device. In other words, the ENAV interface handler 202 controls the output states of video and audio signals by the AV renderer 203 on the basis of at least one of the first signal exchanged with the DVD-Video playback controller 102, and the second signal exchanged with the ECMA Script interpreter 205 and SMIL timing engine 206. The first signal pertains to the playback status of the DVD-Video disk D2, and corresponds to the "DVD control" signal, "DVD trigger" signal, "DVD status" signal, and the like. The second signal pertains to the contents of the ENAV contents, and corresponds to the "ENAV event" signal, "ENAV command" signal, "ENAV property" signal, "ENAV control" signal, and the like.

Generally speaking, the XHTML+SMIL/CSS parser 210 parses an ENAV document indicating playback control information, which is contained in the ENAV contents C21 acquired from the DVD-Video disk D2 or the ENAV contents C22 acquired from the Internet or the like. The ENAV document is made up of a combination of Markup languages such as HTML/XHTML, SMIL, and the like, and Script languages such as ECMA Script, JavaScript, and the like, as described above. The XHTML+SMIL/CSS parser 210 has a function of transmitting an ECMA Script module to the ECMA Script interpreter 205, SMIL module to the SMIL timing engine 206, and XHTML module to the XHTML/CSS layout manager 207 in accordance with the parsing result.

The ECMA Script interpreter 205 interprets the aforementioned ECMA Script module and follows its instruction. That is, the ECMA Script interpreter 205 has a function of issuing an "ENAV command" signal to the ENAV interface handler 202 in correspondence with an "ENAV event" signal sent from the ENAV interface handler 202 or an "ENAV property" signal read from the property buffer of the ENAV interface handler 202.

The SMIL timing engine 206 interprets the aforementioned SMIL module and follows its instruction. That is, the SMIL timing engine 206 has a function of issuing an "ENAV control" signal to the ENAV interface handler 202 or element decoder 208 in correspondence with an "ENAV event" signal sent from the ENAV interface handler 202 or an "ENAV property" signal read from the property buffer of the ENAV interface handler 202 at a designated timing (in accordance with a time measured in the ENAV engine). With this function, control of the DVD-Video playback engine 100 and playback of video data (moving picture, still picture, animation) and audio data can be achieved at a desired timing.

The XHTML/CSS layout manager 207 interprets the aforementioned XHTML module and follows its instruction. That is, the XHTML/CSS layout manager 207 outputs a "layout control" signal to the AV renderer. The "layout control" signal contains information associated with the size and position of a video window to be output (this information often contains information associated with a display time such as display start, end, or continue), and information associated with the level of audio data to be output (this information often contains information associated with an output time such as output start, end, or continue). Also, text information to be displayed, which is contained in the XHTML module, is sent to the element decoder 208, and is decoded and displayed using desired font data.

Practical methods of parsing and interpreting Markup and Script languages can adopt the same methods as parsing/interpretation in state-of-the-art techniques such as HTML/XHTML, SMIL, and the like or ECMA Script, JavaScript, and the like (the hardware used is the microcomputer that has been mentioned at the beginning of the description of FIG. 3). Note that commands and variables described in Scripts are different since objects to be controlled are different. The ENAV document used upon practicing the present invention uses unique commands and variables associated with playback of the DVD-Video disk D2 and/or the ENAV contents C21 or C22. For example, a command that switches the playback contents of the DVD-Video disk D2 or the ENAV contents C21 or C22 in response to a given event is unique to a Markup or Script language in the ENAV document.

As another example of commands and variables unique to a Markup or Script language in the ENAV document, those which are used to change the video size from the DVD-Video playback engine 100 and/or ENAV engine 200 and to change the layout of that video data are available. A change in video size is designated using a size change command and a variable that designates the size after change. A change in video layout is designated by a display position change command and a variable that designates the coordinate position or the like after change. When objects to be displayed overlap on the screen, a variable that designates depth ordering is added. Also, commands and variables used to change the audio level from the DVD-Video playback engine 100 and/or ENAV engine 200 or to select an audio language to be used are available. A change in audio level is designated by an audio level change command and a variable that designates an audio level after change. An audio language to be used is selected by an audio language change command and a variable that designates the type of language after change. Furthermore, commands and variables used to control user events in the user event controller 201 are available.

On the basis of the commands/variables of the Markup and Script languages in the ENAV document, as exemplified above, a "layout control" signal is sent from the XHTML/CSS layout manager (some functions are often implemented by the SMIL timing engine 206) to the AV renderer 203. The "layout control" signal controls the layout on the screen, size, output timing, and output time of video data to be displayed on, e.g., an external monitor device or the like (not shown), and/or the tone volume, output timing, and output time of audio data to be played back from an external loudspeaker (not shown).

The element decoder 208 decodes ENAV contents data such as audio data, still picture data, text/font data, moving picture data, animation data, and the like contained in the ENAV contents C21 or C22. That is, the element decoder 208 includes an audio decoder, still picture decoder, text/font decoder, and moving picture decoder in correspondence with objects to be decoded. For example, audio data in the ENAV contents, which is encoded by, e.g., MPEG or AC-3, is decoded by the audio decoder and is'converted into non-compressed audio data. Still picture data, which is encoded by JPEG, GIF, or PNG, is decoded by the still picture decoder, and is converted into non-compressed image data. Likewise, moving picture/animation data, which is encoded by MPEG2, MPEG4, or MacromediaFlash, is decoded by the moving picture/animation decoder, and is converted into non-compressed moving picture data. Text data contained in the ENAV contents is decoded by the text/font decoder using font data contained in the ENAV contents, and is converted into text image data which can be superimposed on a moving or still picture. Video/audio data, which contains these decoded audio data, image data, moving picture data, and text image data as needed, is sent from the element decoder 208 to the AV renderer 203.

The AV renderer 203 has a function of controlling a video/output output. More specifically, the AV renderer 203 controls, e.g., the video display position and size (often including the display timing and display time together), and the audio level (often including the output timing and output time together) in accordance with the "layout control" signal output from the XHTML/CSS layout manager 207. The video/output outputs to be controlled are those from the DVD-Video playback engine 100 and element decoder 208. Furthermore, the AV renderer 203 has a function of controlling mixing and switching of the DVD-Video contents C1 and ENAV contents C21 or C22 in accordance with an "AV output control" signal output from the ENAV interface handler 202.

Note that the ENAV engine 200 in the DVD-Video player in FIG. 3 comprises an interface for sending the ENAV document in the ENAV contents C21 read from the DVD-Video disk D2 to the XHTML+SMIL/CSS parser 210 via the preload/download buffer unit 209, and an interface for sending data (audio data, still picture data, text/font data, moving picture data, and the like) in the read ENAV contents C21 to the element decoder 208 via the preload/download buffer unit 209. These interfaces form an interface (first interface) independent from the Internet connection unit 211 in FIG. 3.

The DVD-Video player in FIG. 3 comprises an interface for receiving the ENAV contents C22 from a communication line such as the Internet or the like, and sending the ENAV document in the received ENAV contents C22 to the XHTML+SMIL/CSS parser 210 via the preload/download buffer unit 209, and an interface for sending data (audio data, still picture data, text/font data, moving picture data, and the like) in the received ENAV contents C22 to the element decoder 208 via the preload/download buffer unit 209. These interfaces form the Internet connection unit (second interface) shown in FIG. 3.

The preload/download buffer unit 209 has a function of temporarily storing the ENAV contents C22 which is acquired from the disk unit 300 or from a server unit 500 via the Internet connection unit 211. Since the ENAV contents C22 is temporarily stored in the preload/download buffer unit 209, seamless playback of the DVD-Video contents C1 can be implemented even when the DVD-Video contents C1 and ENAV contents C22 (may include the ENAV contents C21) are to be simultaneously played back. If this is not the case, the disk unit 300 must access the DVD-Video contents C1 and ENAV contents C21 in the disk at high speed, and it becomes difficult to attain seamless playback.

The buffer manager 204 has a function of controlling the aforementioned preload/download buffer unit 209 in accordance with a "buffer control" signal sent from the ENAV interface handler 202. These two functions will be described in detail later.

The building components of the ENAV engine in FIG. 3 can also be summarized as follows. That is, the ENAV engine comprises:
- XHTML+SMIL/CSS parser 210
   The XHTML+SMIL/CSS parser 210 parses the contents of the ENAV documents.
- ECMA Script Interpreter 205, SMIL timing engine 206, XHTML/CSS layout manager 207
   The ECMA Script Interpreter 205, SMIL timing engine 206, and XHTML/CSS layout manager 207 respectively interpret the parsed modules.
- ENAV interface handler 202
   The ENAV interface handler 202 handles control signals from the ECMA Script Interpreter 205 and SMIL timing engine 206, and those from the DVD-Video playback controller 102.
- Element decoder 208
   The element decoder 208 generates video/audio data corresponding to audio data, still picture data, text/font data, moving picture data, and the like contained in the ENAV contents C21 or C22.
- AV renderer 203
   The AV renderer 203 outputs data obtained by mixing video/audio data generated by the element decoder 208 to that played back by the DVD-Video playback engine 100 on the basis of the execution result of the ENAV command in the ENAV interface handler 202. Or the AV handler 203 selectively outputs one of video/audio data generated by the element decoder 208 and that played back by the DVD-Video playback engine 100 on the basis of the execution result of the ENAV command in the ENAV interface handler 202.
- User event controller 201
   The user event controller 201 generates user events corresponding to user's operations.
- Preload/download buffer unit 209
   The preload/download buffer unit 209 temporarily stores the ENAV contents C22 acquired from the disk unit 300 or from the server unit 500 via the Internet connection unit 211.
- Buffer manager 204
   The buffer manager 204 loads or erases ENAV contents data to or from the preload/download buffer unit 209 in accordance with an instruction from the ENAV interface handler 202 (i.e., an instruction of the ENAV document).

The ENAV interface handler 202 is configured to execute a process corresponding to a user event generated by the user event controller 201. The AV renderer 203 is configured to output data obtained by mixing video/audio data generated by the element decoder 208 to that played back by the DVD-Video playback engine 100 on the basis of the execution result of the ENAV command in the ENAV interface handler 202. Or the AV handler 203 is configured to selectively output one of video/audio data generated by the element decoder 208 and that played back by the DVD-Video playback engine 100 on the basis of the execution result of the ENAV command in the ENAV interface handler 202.

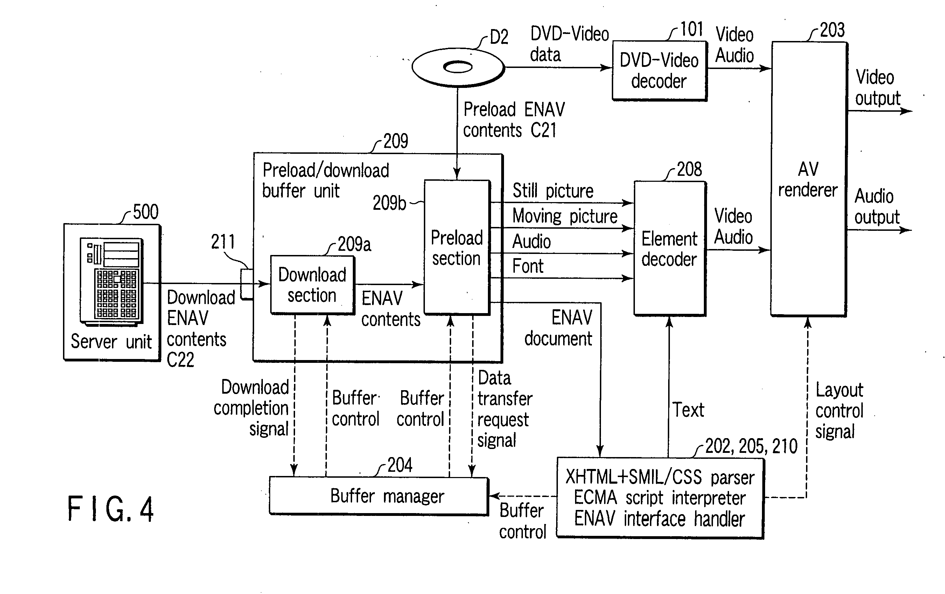

FIG. 4 is a detailed block diagram of the aforementioned preload/download buffer unit 209.

The preload/download buffer unit 209 comprises a download section 209a and preload section 209b. The download section 209a stores the ENAV contents C22 downloaded from the server unit 500. The preload section 209b stores the ENAV contents C21 loaded from the enhanced DVD disk D2 or the ENAV contents C22 transferred from the download section 209a.

The download section 209a reads the ENAV contents C22 on an external server (server unit 500) under the control of the buffer manager 204 based on the markup/script language, and downloads the ENAV contents C22 via the Internet connection unit 211. Upon completion of downloading, the download section 209a informs the buffer manager 204 of completion of downloading (download complete signal), and transfers the ENAV contents 22 to the preload section 209b.

The download section 209a can partially transfer the ENAV contents C22, which have not been completely downloaded yet, in turn from already downloaded data to the preload section 209b in accordance with a data transfer request (data transfer request signal) from the buffer manager 204.

The preload section 209b loads the ENAV contents C21 recorded on the enhanced DVD disk D2 under the control of the buffer manager 204 based on the markup/script language. At this time, if the disk unit 300 is a device that can access the disk at high speed, the disk unit 300 can read out the ENAV contents C21 from the enhanced DVD disk D2 while playing back the DVD-Video contents C1, i.e., reading out DVD-Video data from the enhanced DVD disk D2. If the disk unit 300 is not a device that can make high-speed access, or if the playback operation of the DVD-Video contents C1 is to be perfectly guaranteed, playback of the DVD-Video contents C1 must not be interrupted. In such case, the ENAV contents C21 are read out from the enhanced DVD disk D2 and are stored in the preload section 209b in advance prior to the beginning of playback. In this way, since the ENAV contents C21 are read out from the preload section 209b simultaneously when the DVD-Video contents C1 are read out from the enhanced DVD disk D2, the load on the disk unit 300 can be reduced. Hence, the DVD-Video contents C1 and ENAV contents can be simultaneously played back without interrupting playback of the DVD-Video contents C1.

Furthermore, the preload section 209b receives and stores the ENAV contents C22, which are temporarily stored in the download section 209a. In this manner, the ENAV contents downloaded from the external server (server unit 500) can also be read out simultaneously with the DVD-Video contents C1 as in the ENAV contents C21 recorded on the enhanced DVD disk D2.

The download section 209a or preload section 209b has a limited storage capacity. That is, the data size of ENAV contents C21 or C22 that can be stored in the download section 209a or preload section 209b is limited. For this reason, it is possible to erase ENAV contents C21 or C22 with low necessity and to save those with high necessity under the control of the buffer manager 204 (buffer control). Such save control and erase control may be made based on the ENAV document, or may be automatically executed by the preload/download buffer unit 209.

The buffer manager 204 can send the following instructions as "buffer control" to the download section 209a and preload section 209b in accordance with an instruction of the ENAV document.
- load a specific file or a part of file from a server (download)
- load a specific file or a part of file from a disk (preload)
- erase a specific file or a part of file from a buffer
- transfer a specific file or a part of file from the download section 209a to the preload section 209b

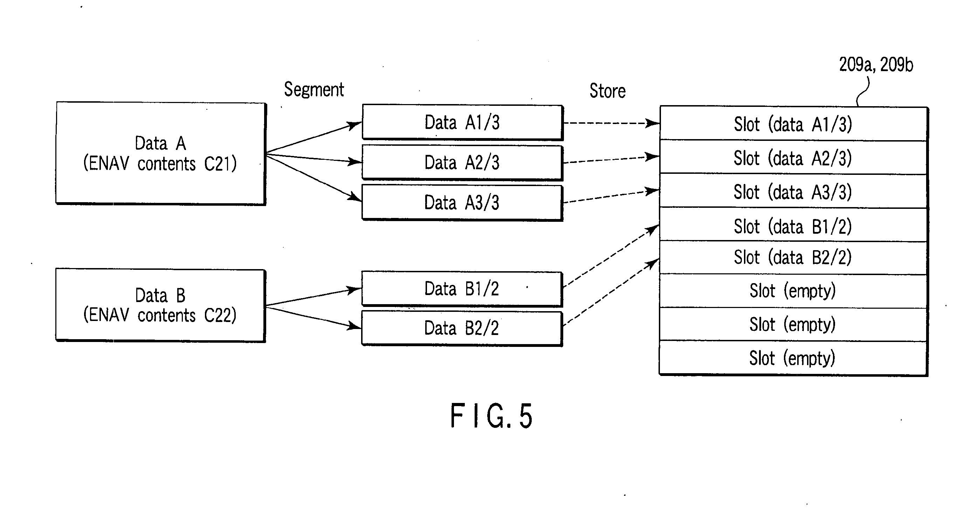

FIG. 5 shows an example of the arrangement of the download section 209a and preload section 209b.

For example, the download section 209a and preload section 209b respectively comprise a plurality of slots. Data of the ENAV contents C22 downloaded from the external server (server unit 500) and the ENAV contents C21 read out from the enhanced DVD disk D2 are segmented in correspondence with the slot size, and the segmented data are stored in respective slots. That is, in the preload/download buffer unit 209, the ENAV contents C21 and C22 can be managed not only for respective files but also for slots each having a smaller size. In this manner, when the ENAV contents C22 are downloaded from the external server (server unit 500), the following process can be made. When only some of data of the file of the ENAV contents C22 have been downloaded, only those already downloaded data are read out (played back) in the meantime. The remaining non-downloaded data are continuously downloaded as a background process of the read-out (playback) process.

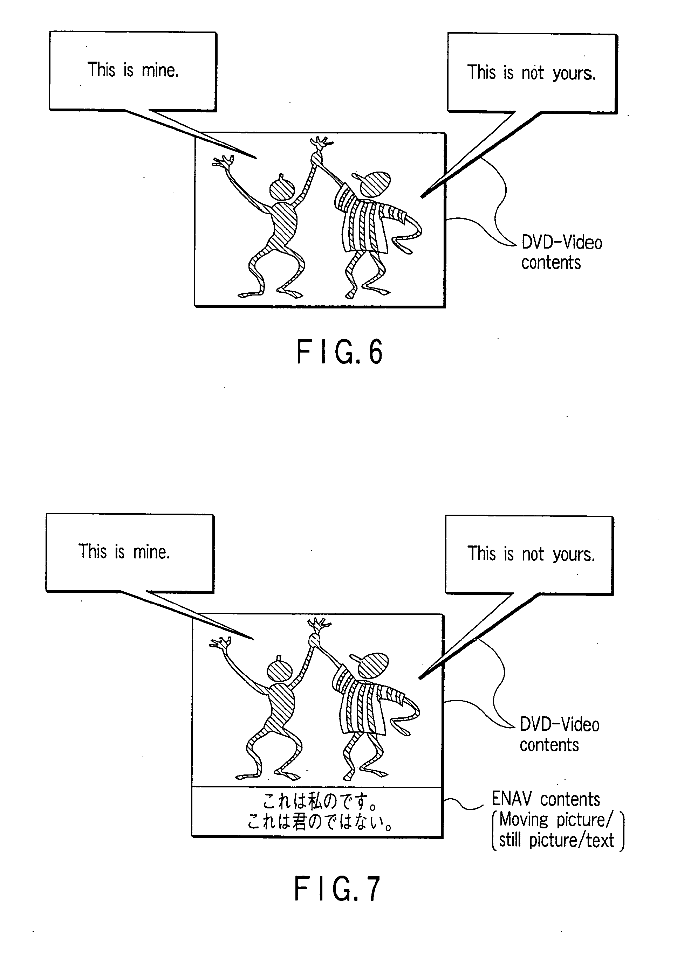

The effects obtained upon playing back the ENAV contents C22 will be explained below with reference to FIGS. 6 to 9. That is, a case will be explained below wherein the ENAV contents C22 are played back in synchronism with the DVD-Video contents C1, while being downloaded from the external server (server unit 500) or after being downloaded temporarily.

An explanation will be given first with reference to FIG. 6. FIG. 6 shows playback of the DVD-Video contents C1 alone. For example, assume that a given user plays back a DVD-Video disk (enhanced DVD disk D2), but that DVD disk contains only English audio or subtitle data. If that user can understand only Japanese, it is difficult for him or her to appreciate that DVD-Video disk.

Hence, the player implements playback processes shown in FIGS. 7 to 9. That is, the player accesses the external server (server unit 500). On this external server, contents of image (moving or still picture) data with Japanese subtitle data or contents with Japanese audio data are prepared. As a method of accessing that external server, a method of specifying the external server on the basis of data on the DVD-Video disk, or a method of designating that external server by the user is available. In this way, the player can acquire contents with Japanese subtitle data or audio data by accessing the external server.

For example, the aforementioned contents for Japanese (ENAV contents C22) are downloaded from the external server via the Internet connection unit 211. That is, the contents are stored in the download section 209a in the preload/download buffer unit 209. Upon completion of downloading of the full contents, the contents are transferred to the preload section 209b, and begin to be played back together with the DVD-Video contents C1. In this case, since a long download time is required, the playback start time of the contents is delayed (wait time is produced). If all data are to be stored in the preload/download buffer unit 209, a buffer with a large storage capacity is required. If a buffer with a large storage capacity is prepared, and all data are stored in the preload/download buffer unit 209, the contents can be seamlessly played back irrespective of the connection state of the external server.

Alternatively, the aforementioned contents for Japanese (ENAV contents C22) are downloaded from the external server via the Internet connection unit 211, and are stored in the download section 209a in the preload/download buffer unit 209. At the same time, already downloaded data are transferred in turn to the preload section 209b. Upon data transfer, the already downloaded data begin to be played back together with the DVD-Video contents C1. In this case, playback of the contents can start with nearly no wait time. Furthermore, the contents data which have been played back and are not required are erased from the download section 209a or preload section 209b of the preload/download buffer unit 209. In this manner, the storage capacity required for the preload/download buffer unit 209 can be reduced. However, connection to the external server must be assured to attain seamless playback of the contents.

A detailed explanation will be given with reference to FIG. 7. FIG. 7 shows a display example of the ENAV contents C22, which are downloaded from the external server and are required to display Japanese subtitle data, together with the DVD-Video contents C1. In order to display both the contents together, the display region of the DVD-Video contents C1 is reduced from a normal size to assure a region for displaying the ENAV contents C22 (still picture, moving picture), as shown in FIG. 7. When the ENAV contents C22 are transparent type image contents which can reflect the background, the ENAV contents C22 can be pasted on the DVD-Video contents C1 without reducing the size of the DVD-Video contents C1. In addition, when the ENAV contents C22 are made up of text and font data, text/font data rasterized by the element decoder can be pasted and displayed on the DVD-Video contents C1. When the ENAV contents C22 cannot be downloaded, display can be made using alternative image data, e.g., image data that is already loaded or image data that are pre-stored in the player.

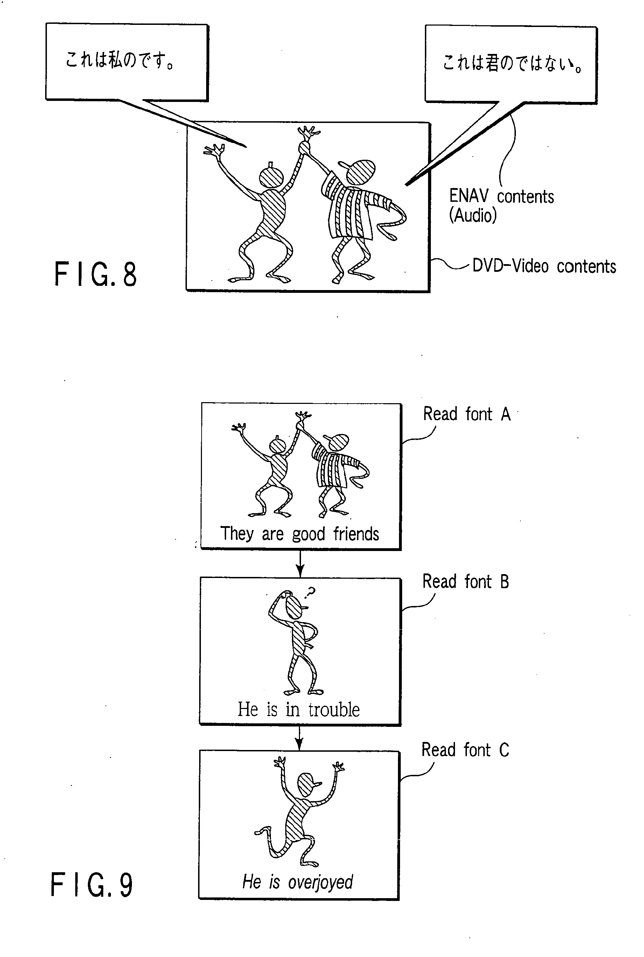

Next, an explanation will be given with reference to FIG. 8. FIG. 8 shows a playback example of the ENAV contents C22 for Japanese audio, which are downloaded from the external server, together with the DVD-Video contents C1. Japanese audio data of the ENAV contents C22 are played back in place of some or all audio data of the DVD-Video contents C1.

Subsequently, an explanation will be given with reference to FIG. 9. FIG. 9 shows an example wherein font data to be displayed changes in the middle of the ENAV contents C22 to be played back. In this example, font data used in display changes like font A → font B → font C as pages are turned. At this time, font data required to display fonts A, B, and C must be loaded by the preload/download buffer unit 209 before fonts A, B, and C are displayed. If required font data cannot be loaded by the preload/download buffer unit 209 before that font is displayed due to the connection state of the Internet, display is made using an alternative font, e.g., font data that is already loaded or font data that is pre-stored in the player. Furthermore, desired font data is used as soon as the preload/download buffer unit 209 can load desired font data.

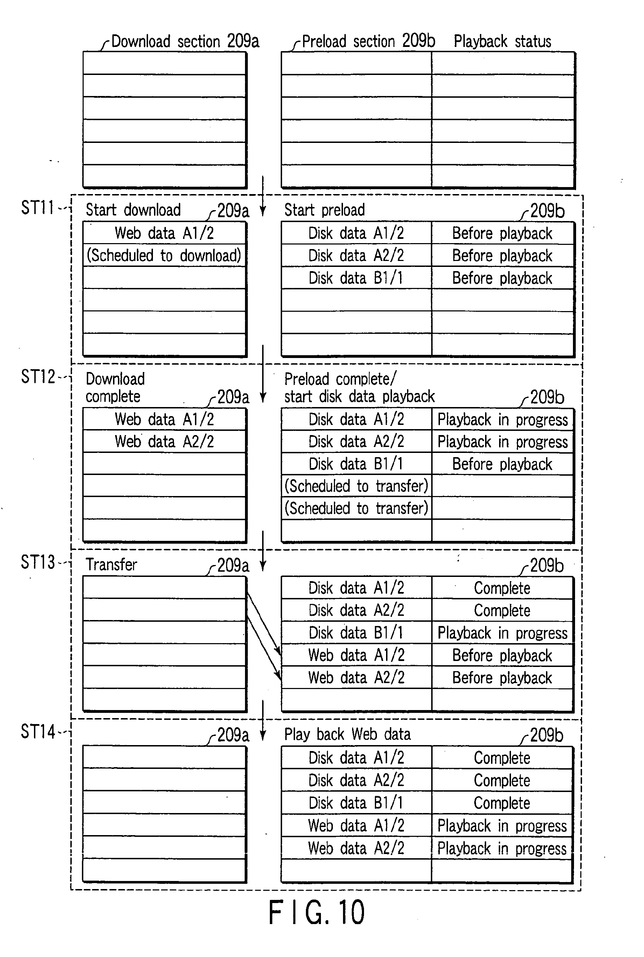

FIGS. 10 to 13 show some examples when the ENAV contents C22 downloaded from the external server (server unit 500) are stored in respective slots of the download section 209a and are transferred to the preload section 209b.

FIG. 10 shows an example wherein the ENAV contents C21 on the enhanced DVD disk D2 are loaded onto the preload section 209b, and the ENAV contents C22 acquired from the external server are loaded onto the preload section 209b via the download section 209a.

The download section 209a and preload section 209b are formed of a plurality of slots, as shown in FIG. 5, and allow to move or erase data in units smaller than a file. The preload section 209b appends information indicating the playback status (before playback, playback in progress, complete) to data in each slot to manage data.

In this example, assume that two sets of ENAV contents C21, i.e., disk data A and B are recorded on the disk. Disk data A has a file size corresponding to two slots, and disk data B has a file size corresponding to one slot. Furthermore, assume that one set of ENAV contents C22 and Web data A are present on the server. Web data A has a file size corresponding to two slots.

Upon reception of a contents playback request, the preload/download buffer unit 209 preloads the ENAV contents C21 recorded on the disk. Furthermore, the buffer unit 209 downloads the ENAV contents C22 present on the server unit to the download section 209a. The preload section 209b is a buffer used to play back the ENAV contents C21 and C22. The download section 209a is a buffer used to download the ENAV contents C22. The download section 209a and preload section 209b can operate independently.

### • ST11

The ENAV contents C21 on the disk can be loaded onto the buffer faster than the ENAV contents C22 from the server. For this reason, assume that the download section 209a continues to download Web data A even after the preload section 209b has preloaded disk data A and B. However, since the file size of Web data A can be detected before the beginning of downloading, an area required to record the Web data can be assured in advance ("scheduled to download" in FIG. 10). Since playback of disk data A and B has not started yet, the playback status is "before playback".

### •ST12, ST13, ST14

The player can start playback of the ENAV contents C21 as soon as the preload process of the ENAV contents C21 on the disk is complete. At this time, the playback status of the ENAV contents C21, which are played back, is "playback in progress". Also, the playback status of the ENAV contents C21, which have been played back, is "complete". On the other hand, the ENAV contents C22 acquired from the server are transferred to the preload section 209b to start playback as soon as they have been downloaded to the download section 209b. At this time, transfer is made after an area required to record can be assured on the preload section 209b, i.e., after it is confirmed if the downloaded data are possible to transfer.

As described above, both the ENAV contents C21 loaded from the disk and the ENAV contents C22 downloaded from the sever can be played back without discrimination.

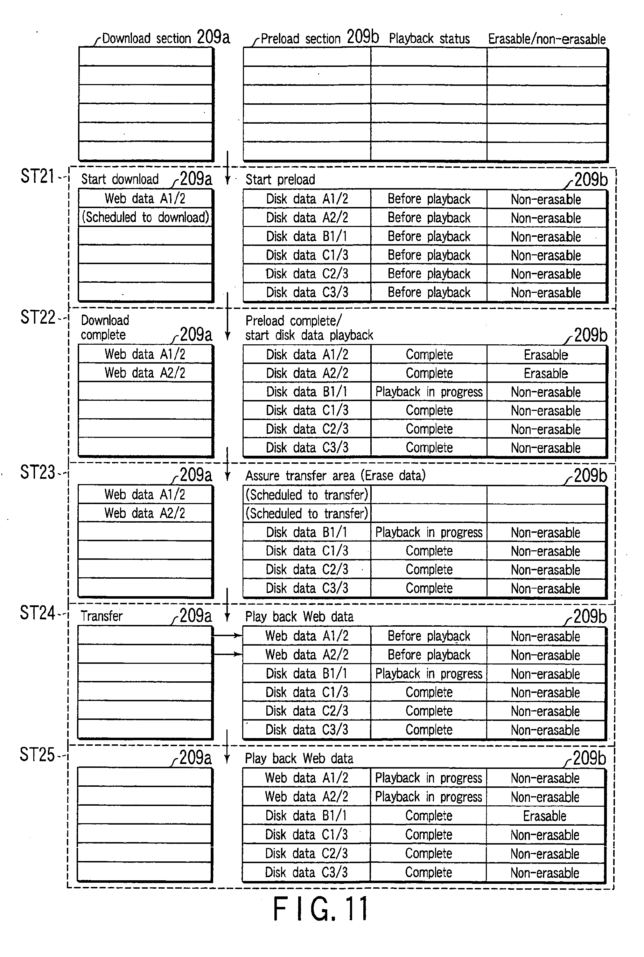

FIG. 11 shows an example wherein the ENAV contents C21 and C22, which have already been played back and are not required, are erased from the buffer, and new ENAV contents C22 are loaded and recorded.

In this example, the download section 209a and preload section 209b are formed of a plurality of slots. Not only information indicating the playback status but also information indicating erasable/non-erasable status are appended to each slot of the preload section 209b. In case of ENAV contents that can be erased, "erasable" is recorded. On the other hand, in case of ENAV contents which cannot be erased, "non-erasable" is recorded.

Furthermore, in this example, disk data A having a size for two slots, disk data B having a size for one slot, and disk data C having a size for three slots are recorded on the disk, and Web data A having a size for two slots is present on the server.

### •ST21

Upon reception of a contents playback request, disk data A, B, and C are preloaded, and Web data A is downloaded. Since playback of the preloaded disk data has not started yet, these data are managed to have playback status = "before playback" and erasable/non-erasable status = "non-erasable". On the other hand, disk data which has already been played back is managed to have playback status = "complete" and erasable/non-erasable status = "erasable" or "non-erasable". For example, data which need not be played back again after completion of playback is managed with "erasable", and data which need be played back even after completion of playback is managed with "non-erasable".

### •ST22

Assume that downloaded Web data A is to be transferred to the preloaded section 209b, but an area required to record Web data A cannot be assured on the preload section 209b. In this case, the erasable/non-erasable information is referred to. If erasable data is present on the preload section 209b, such data is erased from the preload section 209b, and the Web data is transferred to that empty area. If no erasable data is present on the preload section 209b, the transfer process is paused, and the control waits until data on the preload section 209b becomes erasable.

### • ST23, ST24, ST25

In this example, since disk data A is erasable, disk data A is erased from the preload section 209b, and Web data A on the download section is transferred to this area, thus playing back Web data A.

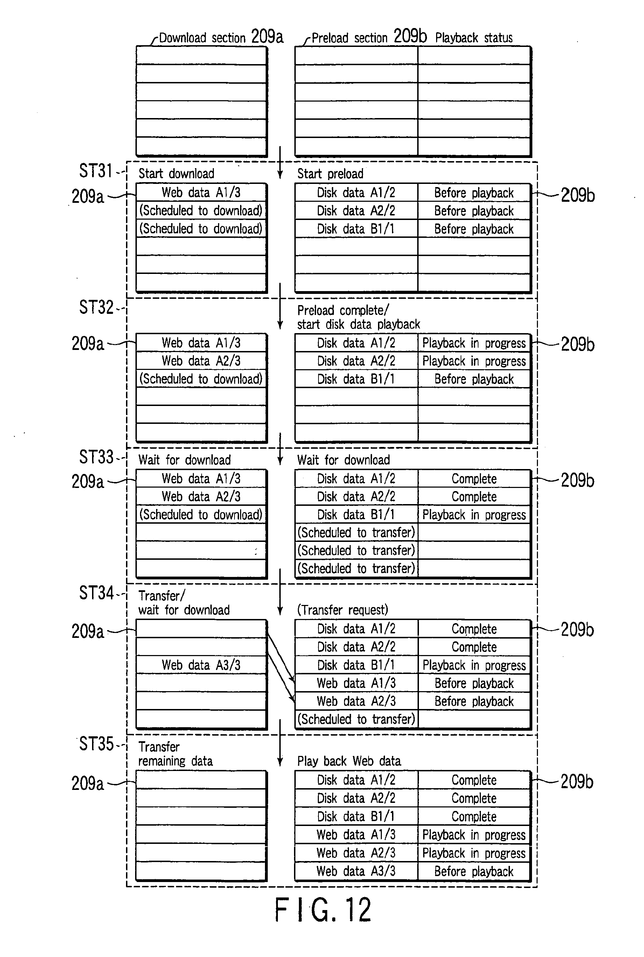

FIG. 12 shows an example when already downloaded data is read out from a file whose downloading is in progress, and the readout data is played back.

In this example as well, the download section 209a and preload section 209b are formed of a plurality of slots, and information indicating playback status is appended to each slot of the preload section 209b.

In this example, disk data A having a size for two slots and disk data B having a size for one slot are recorded on the disk, and Web data A having a size for three slots is present on the server.

### •ST31, ST32

Upon reception of a contents playback request, disk data A and B are preloaded, and Web data A is downloaded. The ENAV contents C21 on the disk are played back as soon as the preload process is complete. (In this example, disk data A and B are played back in the order named.)

### • ST33

When the playback process of disk data A and B is complete, and the download process of all data of Web data A is not complete yet, already downloaded partial data of Web data A is transferred to the preload section 209b. In this example, when disk data A has been played back, and disk data B is about to be played back, only Web data A1 and A2 have been downloaded to the download section 209a. In order to seamlessly play back ENAV contents, Web data A1 and A2 are transferred from the download section 209a to the preload section 209b during playback of disk data B. In this case, since Web data A3 has not been downloaded yet, only Web data A1 and A2 are transferred. At this time, an area for Web data A3 is assured in advance on the preload section 209b.

### •ST34, ST35

Web data A1 and A2 are played back in turn as soon as they are transferred to the preload section 209b. Also, Web data A3 is transferred to the preserved area on the preload section 209b and is played back as soon as its download process is complete.

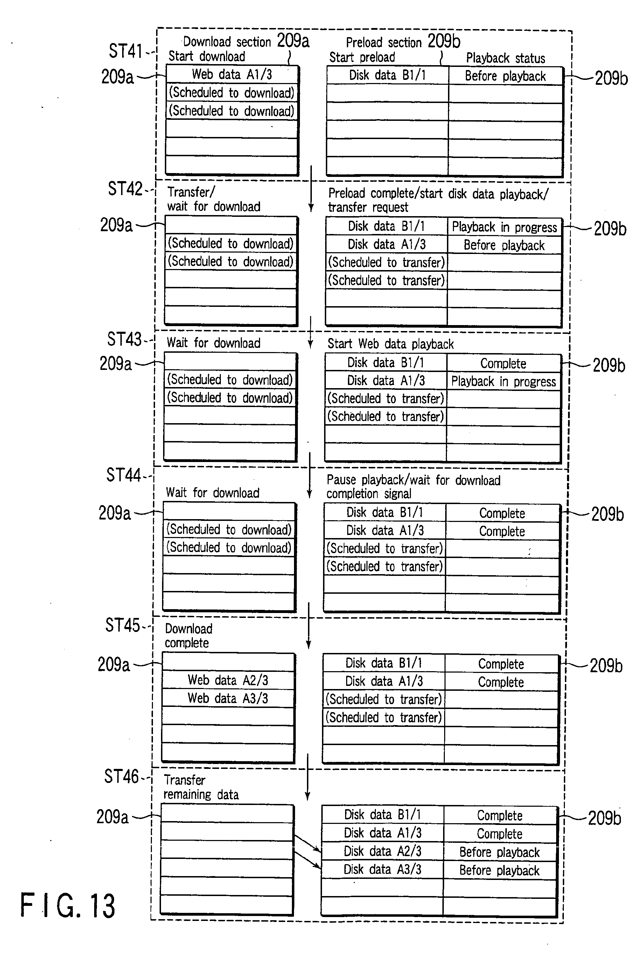

FIG. 13 shows another example when already downloaded data is read out from a file whose downloading is in progress, and the readout data is played back.

In this example as well, the download section 209a and preload section 209b are formed of a plurality of slots, and information indicating playback status is appended to each slot of the preload section 209b.

In this example, disk data B having a size for one slot is recorded on the disk, and Web data A having a size for three slots is present on the server.

### • ST41, ST42

Upon reception of a contents playback request, disk data B is preloaded, and Web data A is downloaded. The ENAV contents on the disk are played back as soon as the preload process is complete.

### •ST43

During playback of disk data B, already downloaded partial data of Web data A is transferred to the preload section 209b even when all data of Web data A have not been downloaded yet. In this example, only Web data A1 is downloaded to the download section 209a upon playing back disk data B. In order to seamlessly playback ENAV contents, Web data A1 is transferred from the download section 209a to the preload section 209b during playback of disk data B. Since Web data A2 and A3 have not been downloaded yet, Web data A1 alone is transferred. At this time, areas for Web data A2 and A3 are assured in advance on the preload section 209b.

### •ST44

Web data A1 is played back as soon as it is transferred to the preload section 209b.

### •ST45

When the download process of Web data A2 is not completed even after the playback process of Web data A1 is complete, and when the DVD-Video contents and ENAV contents are synchronously played back, playback of the DVD-Video contents is paused, and the control waits until the download process of Web data A2 is completed.

### •ST46

Web data A2 is transferred to the preserved area on the preload section 209b and is played back, as soon as its download process is complete. Also, Web data A3 is played back as soon as its download process is complete.

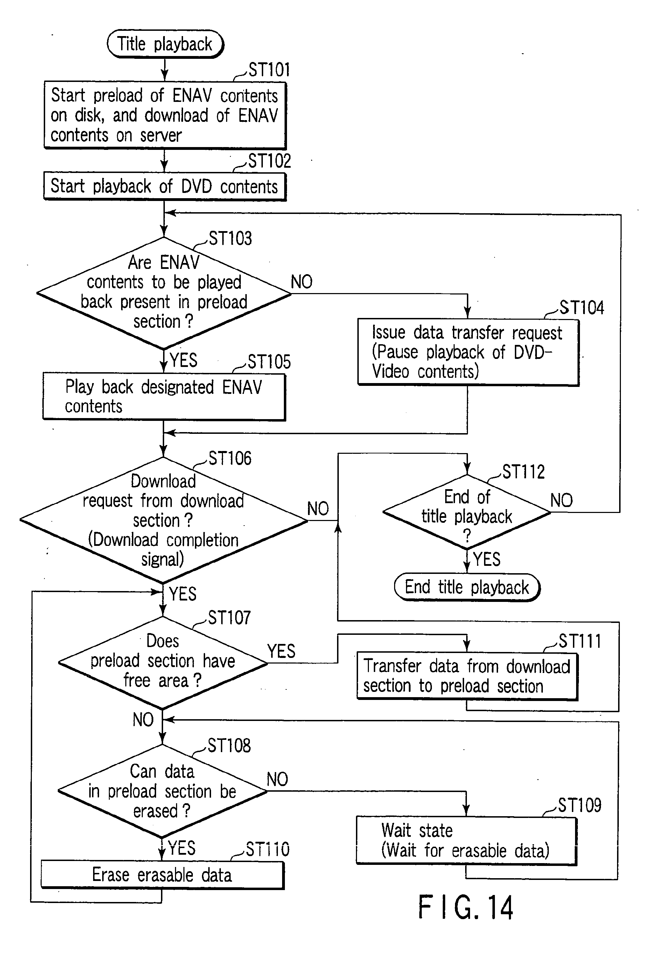

FIG. 14 is a flow chart that summarizes the operation of the preload section 209b.

Upon reception of a title playback request, the player controls the preload section 209b to start a preload process of the ENAV contents C21 on the disk (ST101). At the same time, the player requests the download section 209a to download ENAV contents C22 on the server (ST101).

Upon completion of the preload process of the ENAV contents C21 on the disk, the player starts playback of the DVD-Video contents C1 (ST102).

Upon reception of a playback request of the ENAV contents C22 in synchronism with playback of the DVD-Video contents C21, the player checks if the requested ENAV contents C22 are present on the preload section 209b (ST103). If the requested ENAV contents C22 are present on the preload section 209b (ST103, YES), the player plays back the designated ENAV contents C22 (ST105).

If the designated ENAV contents C22 are not present on the preload section 209b (ST103, NO), the player issues a data transfer request signal from the download section 209a to the preload section 209b (ST104). This request presses downloading to the download section 209a. At this time, the playback process of the DVD-Video contents C21 must be paused, and the control waits for completion of the download process of the ENAV contents C22 in some cases.

Furthermore, upon reception of a transfer request (download completion signal) from the download section 209a (ST106), the player checks if an area which can store transferred ENAV contents C22 is available on the preload section 209b (ST107). If no area which can store transferred ENAV contents C22 is available on the preload section 209b (ST107, NO), and if erasable ENAV contents C21 and C22 are found (ST108, YES), the player erases data of such erasable ENAV contents C21 and C22 (ST110). If no erasable ENAV contents C21 and C22 are found (ST108, NO), the preload section 209b waits until the status of ENAV contents C21 and C22 stored in it changes to "erasable" (ST109). After a free area is assured on the preload section 209b by repeating the aforementioned operation, data of the ENAV contents C22 are transferred from the download section 209a to the preload section 209b.

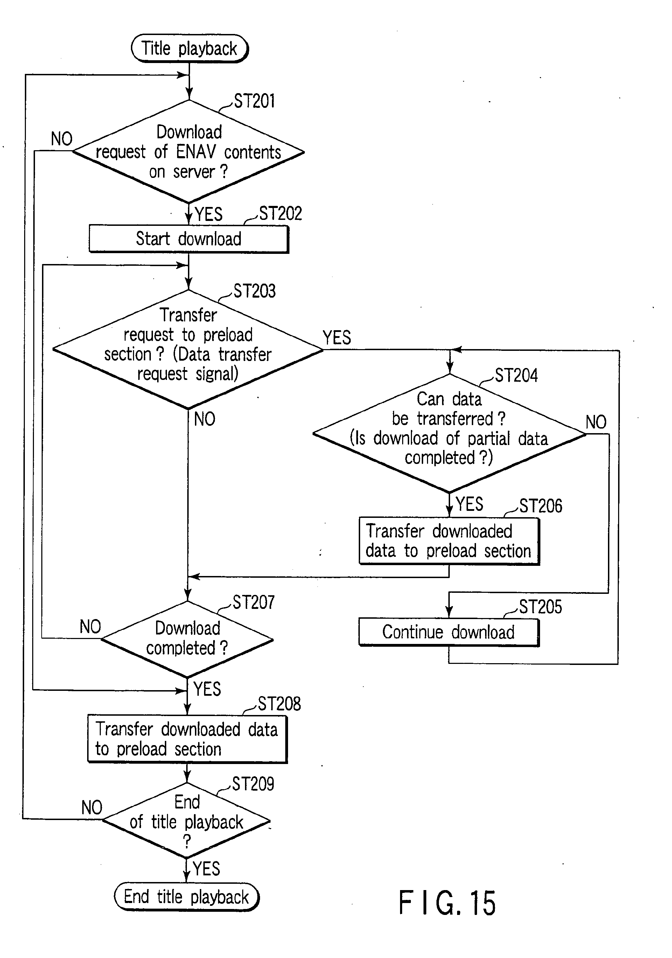

FIG. 15 is a flow chart that summarizes the operation of the download section 209a.

Upon reception of a title playback request, the player requests the download section 209a to download the ENAV contents C22 on the server (ST201). The download section 209a starts a download process in response to this request (ST202).

Upon reception of a data transfer request (data transfer request signal) from the download section 209a to the preload section 209b during the download process (ST203, YES), the download section 209a checks if data of the ENAV contents C22 is ready to transfer (ST204). If data is not ready to transfer (ST204, NO), the download section 209a continues the download process until the data is ready to transfer (ST205). At this time, the playback process of the DVD-Video contents C1 must be paused in some cases until the download process is completed. If even partial data has been downloaded and is ready to transfer (ST204, YES), the download section 209a transfers the downloaded data to the preload section 209b (ST206). The aforementioned operation is repeated until all data of the designated ENAV contents C22 are downloaded and are transferred to the preload section 209b.

If no data transfer request is received during the download process (ST203, NO), the downloaded data are transferred to the preload section 209b (ST208) as soon as the download process is completed (ST207, YES).

Finally, if the playback process of the title continues (ST209, NO), the control waits for the next download request (ST201); otherwise (ST209, NO), the flow ends.

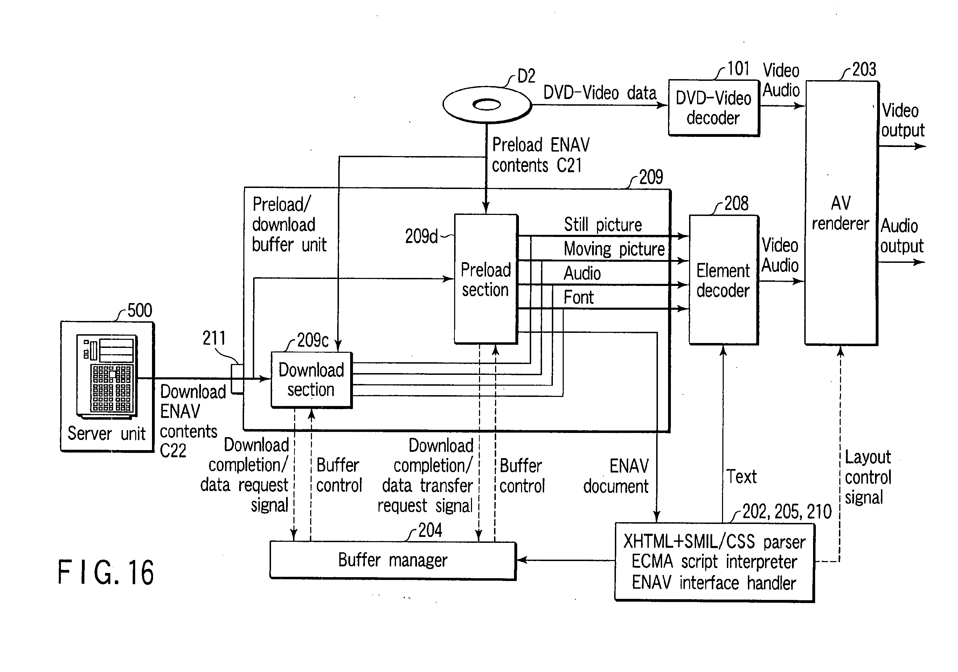

Modification 1 of the preload/download buffer unit will be explained below with reference to FIGS. 16 to 18. In FIG. 4, the ENAV contents C22 downloaded from the server are loaded onto the download section 209a, and the ENAV contents C21 preloaded from the enhanced DVD disk D2 are loaded onto the preload section 209b. Furthermore, the ENAV contents C21 and C22 to be sent to the element decoder 208 are loaded from the preload section 209b.

In modification 1, the ENAV contents C22 downloaded from the server are loaded onto a download section 209c and preload section 209d, and the ENAV contents C21 preloaded from the enhanced DVD disk D2 are loaded onto the download section 209c and preload section 209d. Furthermore, the ENAV contents C21 and C22 loaded by the preload section 209d and download section 209c are sent to the element decoder 208. That is, the preload section 209d and download section 209c have the same function.

As shown in FIG. 16, the preload section 209d loads the ENAV contents C21 from the enhanced DVD disk D2, and sends them to the element decoder 208 and XHTML+SMIL/CSS parser 210. On the other hand, the download section 209c downloads the ENAV contents C22 from the server. When the ENAV contents on the preload section 209c have been consumed, and the required ENAV contents have been downloaded to the download section 209c, the preload section 209d is controlled to serve as a download section, and the download section 209c is controlled to serve as a preload section.

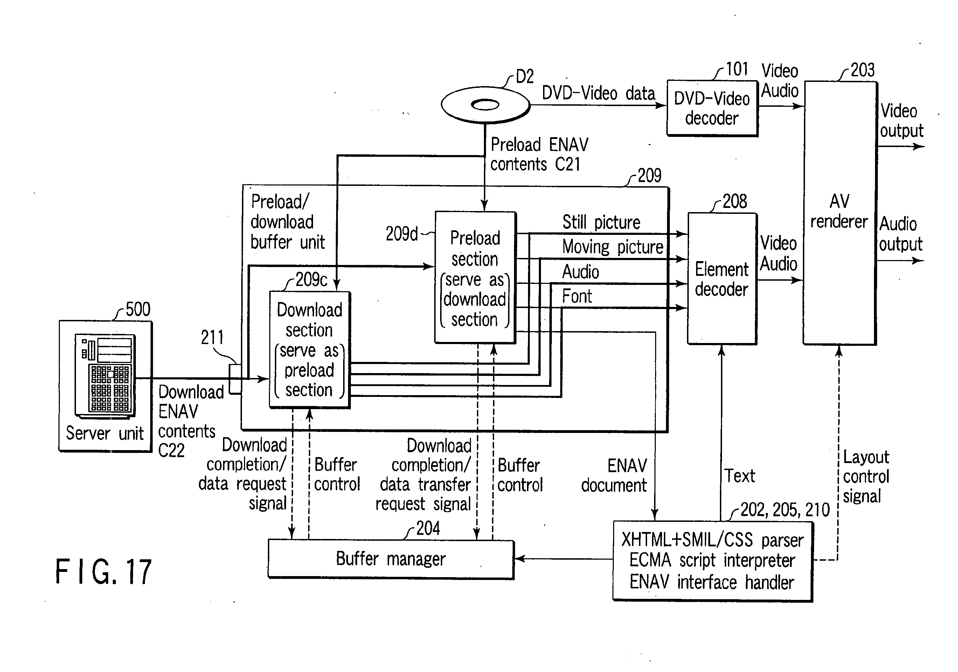

As shown in FIG. 17, the new preload section (the download section 209c serving as the preload section) has loaded the ENAV contents C22 downloaded from the server unit. For this reason, the new preload section sends these contents to the element decoder 208 and XHTML+SMIL/CSS parser 210. On the other hand, the new download section (the preload section 209d serving as the download section) erases unnecessary data of the ENAV contents C21, i.e., consumed data of the ENAV contents from the buffer, and downloads newly required ENAV contents C22 from the server.

Furthermore, assume that the ENAV contents C22 on the new preload section have been consumed, and the required ENAV contents C22 have been downloaded to the new download section. At this time, the new preload section is controlled to serve as the preload section, and the new download section is controlled to serve as the preload section. That is, the functions revert to those shown in FIG. 16.

By repeating the aforementioned processes, the ENAV contents C21 and C22 can be played back using a buffer with a small capacity while downloading data from the server.

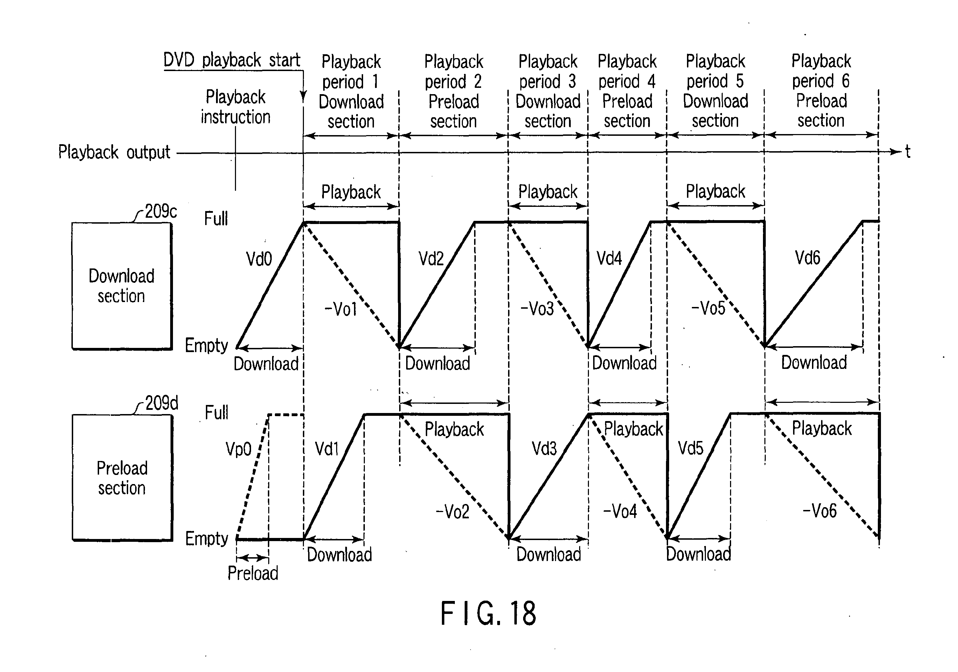

The download timings of the download sections 209c and preload section 209d, and the playback timings of expansion information downloaded to the download sections 209c and preload section 209d will be described below with reference to FIG. 18. The downloaded expansion information is played back in synchronism with playback of the DVD-Video contents C1.

The average download rate upon downloading ENAV contents from the server unit to the preload/download buffer unit 209 during playback period i is defined by Vdi (i = 0 to 6). Also, the average read rate upon reading out ENAV contents from the preload/download buffer unit 209 to the element decoder 208 during playback period i is defined by Voi (i = 1 to 6). Note that the average download rate of the download process before the beginning of DVD-Video playback is Vd0. Also, the average preload rate of the preload process before the beginning of DVD-Video playback is Vp0.

Upon reception of a DVD playback request, the player downloads the ENAV contents C22 from the server unit to the download section 209c (average download rate Vd0). At the same time, the player downloads required ENAV contents C21 from the disk onto the preload section 209d (average preload rate Vp0). At this time, the preload section 209d may not become full depending on the data size of the ENAV contents C21. The preloaded ENAV contents C21 are immediately read out to the XHTML+SMIL/CSS parser 210 or element decoder 208. At this time, the ENAV contents C21, which have been read out and become unnecessary, are erased.

After the download process is completed until the download section 209c becomes full of data (or up to a given capacity), the download section 209c serves as a preload section, and the downloaded ENAV contents C22 are read out to the element decoder 208 (average read rate Vol). At the same time, DVD-Video playback starts, i.e., a synchronous playback process of the ENAV contents C22 decoded by the element decoder 208 and the DVD-Video contents C1 starts. At this time, the preload section 209d serves as a download section, and downloads ENAV contents C22 from the server unit (average download rate Vd1). At this time, the ENAV contents C22 stored in the download section 209c are played back (playback period 1).

Upon completion of all data of the ENAV contents C22 stored in the download section 209c, all the data of the ENAV contents C22, which have been read out and become unnecessary, are erased, and the download section 209c serves as a download section again. That is, the preload section 209d sends the downloaded ENAV contents C22 to the element decoder 208 (average read rate Vo2), and the download section 209c downloads ENAV contents C22 from the server unit (average download rate Vd2). At this time, the ENAV contents C22 stored in the preload section 209d are played back (playback period 2).

As described above, one buffer (one of the download section 209c and preload section 209d) is used to download ENAV contents, and the other buffer (the other of the download section 209c and preload section 209d) is used to play back ENAV contents. The buffer manager 204 controls to selectively use the download section 209c and preload section 209d. Upon completion of playback of the ENAV contents stored in one buffer, each other's functions are exchanged. By repeating this operation, the ENAV contents can be played back in synchronism with the DVD-Video contents while being downloaded.

In order to seamlessly play back the DVD-Video contents and ENAV contents, Vdi ≥ Voi (i ≥ 1) is an essential condition in all playback periods i. If this condition is not met, the playback process of the DVD-Video contents is paused until the download process of the ENAV contents is completed. Or the ENAV contents cannot be played back during the next playback period or a part of that playback period immediately after the condition cannot be met. That is, no sound is generated, or no pictures or text are displayed.

As described above, the DVD-Video player according to one aspect of the modification 1 comprises: an acquisition unit configured to acquire expansion information from an external apparatus via a communication line; first and second storage units configured-to store the expansion information acquired by the acquisition unit; a transfer unit configured to transfer the expansion information to the first or second storage unit, so that the expansion information sequentially acquired by the acquisition unit is alternately stored in the first and second storage units; and a playback unit configured to sequentially play back the expansion information sequentially stored in the first and second storage units.

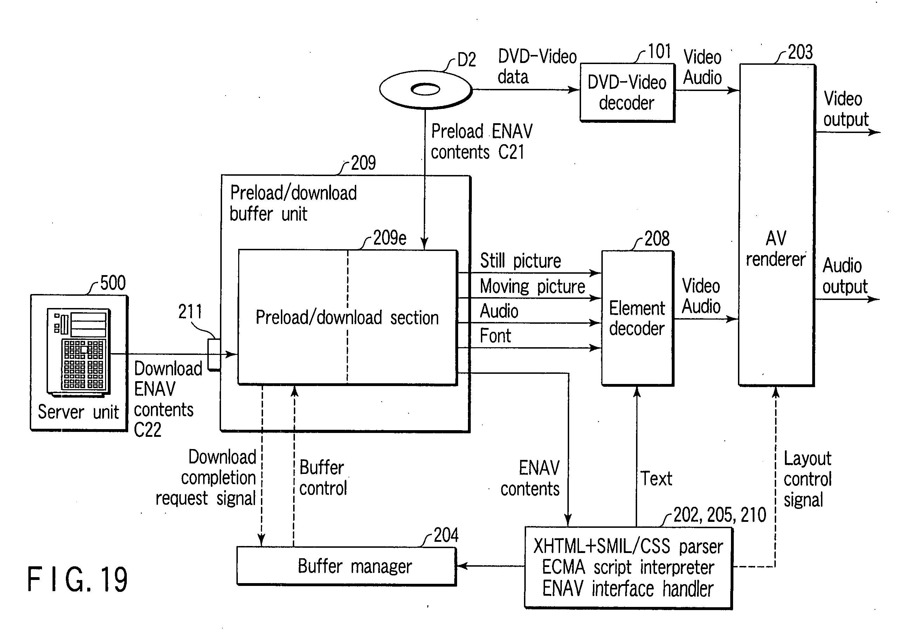

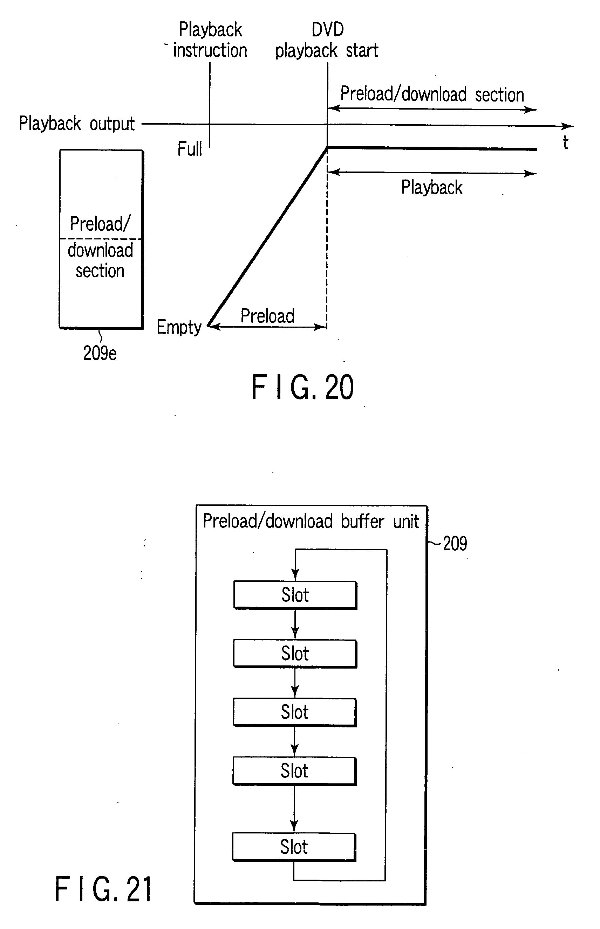

Modification 2 of the preload/download buffer unit will be described below with reference to FIGS. 19 and 20. In the above description (FIG. 4 or FIGS. 16 to 18), the case has been exemplified wherein given areas of the preload/download buffer unit are used as the preload and download sections. That is, the case has been exemplified wherein the preload and download sections have fixed capacities. However, the present invention is not limited to such specific arrangement. For example, as shown in FIGS. 19 and 20, a preload/download section 209e in which the total capacity of the preload and download sections is fixed, and the capacity is distributed in correspondence with purposes (in accordance with preload and download processes) may be adopted. For example, if the data size to be preloaded is small, and the data size to be downloaded is large, a smaller size may be assigned to the preload section, and a larger size may be assigned to the download section. On the other hand, if only data to be preloaded is present, and no data to be downloaded is present, the whole area of the preload/download section 209e is used to preload all data of ENAV contents C21 before the beginning of playback of the DVD-Video contents C1, as shown in FIG. 20. In this way, the ENAV contents C21 can be played back without pausing playback of the DVD-Video contents C1. The preload storage capacity and download storage capacity in the preload/download section 209e are controlled in accordance with a buffer control instruction from the buffer manager 204.

As described above, the DVD-Video player according to one aspect of the modification 2 comprises: a first acquisition unit configured to acquire first expansion information from an information storage medium; a second acquisition unit configured to acquire second expansion information from an external apparatus via a communication line; a storage unit configured to be able to set a first storage area that stores the first expansion information, and a second storage area that stores the second expansion information; a transfer unit configured to control capacities of the first and second storage areas in the storage unit in accordance with data sizes or types of the first expansion information and the second expansion information, and to transfer the first expansion information to the first storage area and the second expansion information to the second storage area; and a playback unit configured to play back the first expansion information and the second expansion information stored in the storage unit.

Modification 3 of the preload/download buffer unit will be described below with reference to FIG. 21. The slots are arranged in a ring, described in FIG. 21. In this case, the stored data is erased in order of the length of time have stored. That is, each slot can be both download section to store data to be being downloaded and preload section to store data to be used in Element decoder 208.

As described above, according to the present invention, the following effects can be obtained.
(1) Information (DVD-Video contents C1, ENAV contents C21) acquired from a disk and information (ENAV contents C22) provided from an external server can be played back without discrimination. Also, information acquired from the disk can be played back in synchronism with information provided from the external server.
(2) Since not only information (DVD-Video contents C1, ENAV contents C21) acquired from a disk but also information (ENAV contents C22) provided from an external server are used, information (ENAV contents C22) generated after the manufacturing date of the disk can be played back. In other words, fresh information can always be obtained upon playing back the disk.
(3) While downloading information (ENAV contents C22) from an external server, already downloaded partial data of that information can be played back in turn. Hence, a playback process with a shorter wait time can be provided.

## Claims

1. An information playback apparatus **characterized by** comprising:
a first acquisition unit (200, 300) configured to acquire first expansion information from an information storage medium;
a first storage unit (209) configured to store the first expansion information acquired by the first acquisition unit;
a second acquisition unit (200, 211) configured to acquire second expansion information from an external apparatus via a communication line;
a second storage unit (209) configured to store the second expansion information acquired by the second acquisition unit;
a transfer unit (204) configured to transfer the second expansion information stored in the second storage unit to the first storage unit in response to a request that requires the second expansion information; and
a playback unit (203, 208) configured to play back the first expansion information and the second expansion information stored in the first storage unit.

2. An apparatus according to claim 1, **characterized in that** the second storage unit sequentially stores the second expansion information sequentially acquired by the second acquisition unit, and
even when a storage process of full information of the second expansion information in the second storage unit is not complete at the time of reception of the request that requires the second expansion information, if a storage process of partial information of the second expansion information is complete, the transfer unit transfers the stored partial information to the first storage unit.

3. An apparatus according to claim 2,
**characterized in that** even when a storage process of full information of the second expansion information in the first storage unit is not complete, the playback unit sequentially plays back the first expansion information and partial information of the second expansion information stored in the first storage unit.

4. An apparatus according to claim 1, **characterized by** further comprising:
a third acquisition unit (100) configured to acquire contents from the information storage medium, and
wherein the playback unit plays back the contents acquired by the third acquisition unit, and plays back the first expansion information and the second expansion information stored in the first storage unit in synchronism with the playback process of the contents.

5. An apparatus according to claim 4, **characterized in that** when the playback unit cannot play back the first expansion information and the second expansion information stored in the first storage unit in synchronism with the playback process of the contents since a storage process of full information of the second expansion information in the second storage unit is not complete, the playback unit pauses the playback process of the contents.

6. An information playback method **characterized by** comprising:
acquiring (ST101) first expansion information from an information storage medium and storing the acquired first expansion information in a first storage unit;
acquiring (ST101) second expansion information from an external apparatus via a communication line, and storing the acquired second expansion information in a second storage unit;
transferring (ST111) the second expansion information stored in the second storage unit to the first storage unit in response to a request that requires the second expansion information; and
playing back (ST105) the first expansion information and the second expansion information stored in the first storage unit.

7. A method according to claim 6, **characterized in that** the second storage unit sequentially stores the sequentially acquired second expansion information, and
even when a storage process of full information of the second expansion information in the second storage unit is not complete at the time of reception of the request that requires the second expansion information, if a storage process of partial information of the second expansion information is complete, the stored partial information is transferred to the first storage unit.

8. A method according to claim 7, **characterized in that** even when a storage process of full information of the second expansion information in the first storage unit is not complete, the first expansion information and partial information of the second expansion information stored in the first storage unit are sequentially played back.

9. A method according to claim 6, **characterized by** further comprising:
acquiring (ST102) contents from the information storage medium, and
wherein the contents are played back, and the first expansion information and the second expansion information stored in the first storage unit are played back in synchronism with the playback process of the contents.

10. A method according to claim 9, **characterized in that** when the first expansion information and the second expansion information stored in the first storage unit cannot be played back in synchronism with the playback process of the contents since a storage process of full information of the second expansion information in the second storage unit is not complete, the playback process of the contents is paused.
